# EUROPEAN PATENT APPLICATION

(11) **EP 4 760 923 A1**
(43) Date of publication of application: **17.06.2026**
(21) Application number: 24908117.5
(22) Date of filing: 19.12.2024
(51) Int. Cl.: H01M 50/244, H01M 50/251, B65D 88/02, B65D 90/00

(54) **CONTAINER MODULE**

(30) Priority: 22.12.2023 KR 20230190454; 18.12.2024 KR 20240189543
(71) Applicant: LG Energy Solution, Ltd., Seoul 07335 (KR)
(72) Inventor: CHOI, Yeo-Joo, Daejeon 34122 (KR); MUN, Jeong-O, Daejeon 34122 (KR); PARK, Dong-Ho, Daejeon 34122 (KR); PARK, Jeong-Seok, Daejeon 34122 (KR); YOON, Jong-Woong, Daejeon 34122 (KR); LEE, Yong-Tae, Daejeon 34122 (KR); LEE, Hyo-Jin, Daejeon 34122 (KR); JO, Sang-Hyun, Daejeon 34122 (KR)
(74) Representative: BCKIP Part mbB
(86) International application number: PCT/KR2024/020712
(87) International publication number: WO 2025/135834

(57) **Abstract**

A container module according to an embodiment of the present disclosure includes: a case providing a space therein and including a side panel; a first side column positioned inside the case, extending in an up-down direction, and coupled to the side panel; a bracket positioned inside the case, coupled to the first side column, and extending in a front-rear direction; and a battery pack installed on the bracket.

## Description

### TECHNICAL FIELD

The present disclosure relates to a container module.

This application is based on and claims priority from Korean Patent Application No. 10-2023-0190454 filed on December 22, 2023, with the Korean Intellectual Property Office and Korean Patent Application No. 10-2024-0189543 filed on December 18, 2024, with the Korean Intellectual Property Office, the disclosure of which is incorporated herein in its entirety by reference.

### BACKGROUND ART

Currently available secondary batteries on the market include, for example, nickel-cadmium batteries, nickel-hydrogen batteries, nickel-zinc batteries, and lithium secondary batteries. Among the batteries, lithium secondary batteries are attracting more attention than others due to their advantages over other batteries, compared to nickel-based secondary batteries, such as free charging and discharging due to little memory effect, very low self-discharge rate, and high energy density.

As the issues such as power shortages and eco-friendly energy have become more prominent, energy storage systems (ESSs) for storing generated power have been receiving more attention. For example, a smart grid system is being proposed as one of the ways to control power supply and demand. The electrical energy used by consumers is not always constant and may fluctuate from time to time. A representative example is that during the summer, power consumption increases sharply in the afternoon due to the use of air conditioning devices, and then decreases sharply at night. In this way, on the power consumption side, the power consumption is not constant and may fluctuate frequently, but on the power supply side, even if the power production is controlled to some extent, it is realistically difficult to match such power consumption. Therefore, such an imbalance between power supply and consumption may result in power oversupply or power supply shortages, and a smart grid system allows flexibly storing and controlling power to solve this problem. Conceptually, the smart grid system may be said to be a system that stores power at points or areas where surplus power is generated and supplies the stored power to points or areas where power shortages occur. It may be said that one of the key components in building such a smart grid system is the ESS to store power. In addition, as the commercialization of electric vehicles has progressed in earnest in recent years, ESSs may be used in facilities for charging electric vehicles, such as charging stations.

Such ESSs may include multiple battery containers. The number and arrangement of battery containers may vary depending on various environments and requirements. To meet these requirements, there is an increasing need to configure battery containers as a combination of small modules to enhance energy density and enable expansion in various forms.

### DISCLOSURE

### Technical Problem

The present disclosure provides a container module with improved assembly.

The present disclosure provides a container module with a simplified structure.

The present disclosure provides a miniaturized container module.

### Technical Solution

A container module according to an embodiment of the present disclosure may include: a case configured to provide a space therein and including a side panel; a first side column positioned inside the case, extending in an up-down direction, and coupled to the side panel; a bracket positioned inside the case, coupled to the first side column, and extending in a front-rear direction; and a battery pack installed on the bracket.

The case may further include a top panel positioned above the side panel, and the first side column may be coupled to the top panel.

The case may further include a bottom beam positioned below the side panel and extending along a bottom edge of the side panel, and the first side column may be coupled to the top panel.

The case may further include a rear panel, and a corner column positioned at a corner where the side panel and the rear panel meet, and extending in the up-down direction, the container module may further include a second side column positioned inside the case, extending in the up-down direction, and coupled to the corner column, and the bracket may be coupled to the second side column.

The case may further include a top panel positioned above the side panel, and the second side column may be coupled to the top panel.

The case may further include a bottom beam positioned below the side panel and extending along a bottom edge of the side panel, and the second side column is coupled to the bottom beam.

The case may further include a rear panel, the container module may further include a center rear column positioned inside the case, extending in the up-down direction, and coupled to the rear panel, and the bracket may be coupled to the center rear column.

The case may further include a bottom panel, and the center rear column may be coupled to the bottom panel.

The case may further include a bottom panel, the container module may further include a center front column positioned inside the case, extending in the up-down direction, and coupled to the bottom panel, and the bracket may be coupled to the center front column.

The container module may further include a reinforcement beam extending in a left-right direction and coupled to the center front column.

The reinforcement beam may be coupled to the first side column.

the side panel may include a groove formed on an inner surface thereof and extending in the up-down direction, and the first side column may be positioned within the groove.

A container system according to an aspect of the present disclosure includes the container module according to the present disclosure.

An energy storage system according to an aspect of the present disclosure includes the container module of the present disclosure.

### Advantageous Effects

According to at least one of the embodiments of the present disclosure, the energy density of the container module may be improved.

According to at least one of the embodiments of the present disclosure, the structure of the container module may be simplified.

According to at least one of the embodiments of the present disclosure, the container module may be miniaturized.

### DESCRIPTION OF DRAWINGS

The following drawings attached hereto illustrate embodiments of the present disclosure and serve to help further understand the technical idea of the present disclosure together with the detailed description of the present disclosure to be described later. Therefore, the present disclosure should not be construed as being limited to the matters illustrated in the drawings.
FIG. 1 is a view illustrating a container module according to an embodiment of the present disclosure.
FIG. 2 is a view illustrating a column structure of the container module according to an embodiment of the present disclosure.
FIG. 3 is a view illustrating battery packs installed in the column structure of FIG. 2.
FIG. 4 is a view illustrating a cross-sectional configuration taken along cutting line A-A' in FIG. 1.
FIG. 5 is an enlarged view of portion E of FIG. 4.
FIG. 6 is a view illustrating a cross-sectional configuration taken along cutting line B-B' in FIG. 1.
FIG. 7 is an enlarged view of portion J of FIG. 6.
FIG. 8 is an enlarged view of portion K of FIG. 6.
FIG. 9 is an enlarged view of portion L of FIG. 6.
FIG. 10 is an enlarged view of portion F of FIG. 4.
FIG. 11 is a view illustrating a cross-sectional configuration taken along cutting line C-C' in FIG. 1.
FIG. 12 is an enlarged view of portion M of FIG. 11.
FIG. 13 is an enlarged view of portion N of FIG. 11.
FIG. 14 is an enlarged view of portion G of FIG. 4.
FIG. 15 is a view illustrating a cross-sectional configuration taken along cutting line D-D' in FIG. 1.
FIG. 16 is an enlarged view of portion O of FIG. 15.
FIG. 17 is an enlarged view of portion P of FIG. 15.
FIG. 18 is an enlarged view of portion Q of FIG. 15.
FIG. 19 is an enlarged view of portion R of FIG. 15.
FIG. 20 is an enlarged view of portion H of FIG. 4.
FIG. 21 is an enlarged view of portion I of FIG. 4.
FIG. 22 is a view illustrating a container system according to an embodiment of the present disclosure.

### BEST MODE

The terms or words used in the specification and claims should not be construed as limited to their ordinary or dictionary meanings, but should be construed as having meanings and concepts consistent with the technical idea of the present disclosure based on the principle that an inventor may appropriately define the concepts of terms in order to explain his or her own invention in the best way.

Therefore, the embodiments described in this specification and the configurations illustrated in the drawings are only embodiments of the present disclosure and do not fully represent the technical idea of the present disclosure. Therefore, it should be understood that there may be various equivalents and modifications that can replace the embodiments and configurations at the time of filing this application.

Hereinafter, embodiments of the present disclosure will be described in detail with reference to the accompanying drawings.

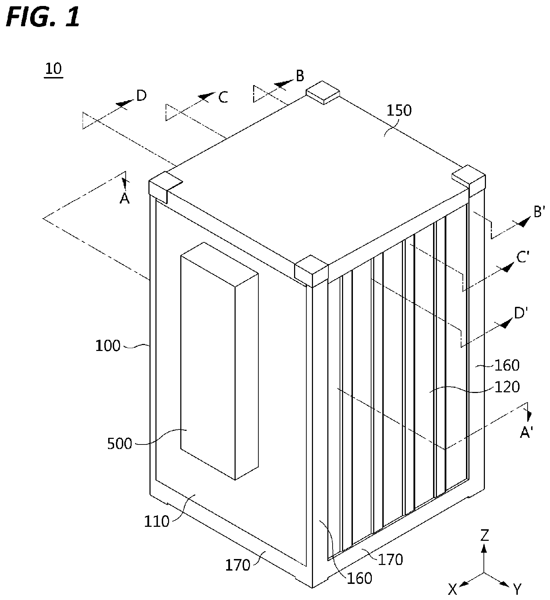

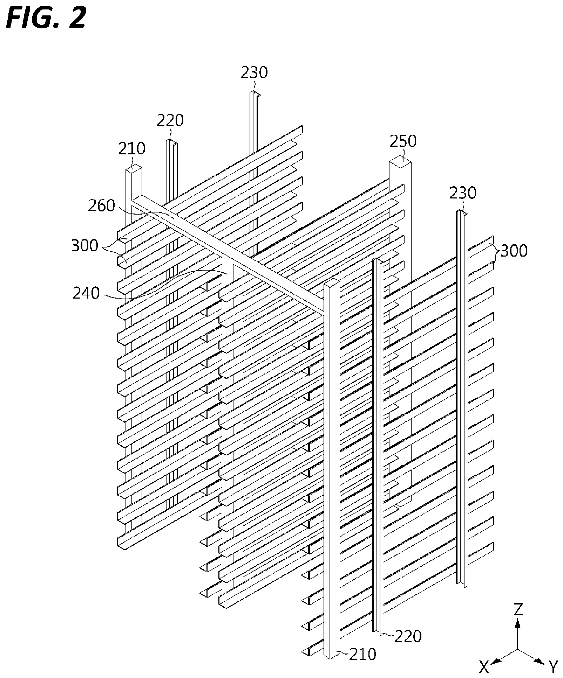

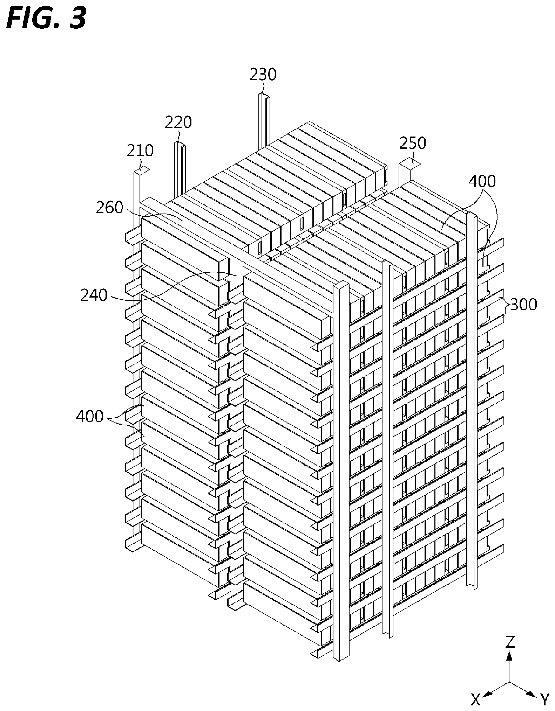

FIG. 1 is a view illustrating a battery module 10 according to an embodiment of the present disclosure. FIG. 2 is a view illustrating a column structure of the container module 10 according to an embodiment of the present disclosure. FIG. 3 is a view illustrating battery packs 400 installed in the column structure of FIG. 2.

Referring to FIGS. 1 to 3, the container module 10 according to an embodiment of the present disclosure may include a case 100, a bracket 300, and a battery pack 400.

The case 100 may provide a space therein. The case 100 may form the exterior of the container module 10. The case 100 may have a rectangular parallelepiped shape. The case 100 may include a front panel 110, a rear panel 130, a top panel 150, a bottom panel 140, and a side panel 120. There may be provided a pair of side panels 120 facing each other.

The bracket 300 may be integrally formed with the case 100. In addition, the brackets 300 may be coupled, fastened, fixed, or attached to the case 100. According to an embodiment, multiple brackets 300 may be integrally formed with the case 100, or may be coupled, fastened, fixed, or attached to the case 100. In addition, each bracket 300 may be manufactured with a cross section in an "L" shape so that a battery pack 400 may be installed thereon.

In all possible embodiments of the present disclosure, the container module 10 may include a battery pack 400. In addition, the container module 10 may include multiple battery packs, and the multiple battery packs may be electrically connected inside the container module 10.

The container module 10 according to an embodiment of the present disclosure may include a case 100, first side columns 210 and 220, a bracket 300, and a battery pack 400.

According to an embodiment, the first side columns 210 and 220 may collectively refer to the side front columns 210 and the side middle columns 220. The first side columns 210 and 220 may be positioned inside the case 100. The first side columns 210 and 220 may extend in the up-down direction or along the Z-axis direction. According to an embodiment, the first side columns 210 and 220 may be integrally formed with the side panels 120. In addition, the first side columns 210 and 220 may support the side panels 120. In addition, the first side columns 210 and 220 may be in contact with the side panels 120. In addition, the first side columns 210 and 220 may be coupled, fastened, fixed, or attached to the side panels 120. For example, the first side columns 210 and 220 may be welded to the inner surfaces of the side panels 120.

The brackets 300 may be coupled, fastened, fixed, or attached to the first side columns 210 and 220. In addition, the brackets 300 may be integrally formed with the first side columns 210 and 220. In addition, the brackets 300 may extend in the front-rear direction or along the X-axis direction. According to an embodiment, each bracket 300 is designed to have a cross section in an "L" shape so that a battery pack 400 may be installed thereon.

The battery pack 400 may be positioned on each bracket 300, and according to an embodiment, the battery pack 400 may be installed, fastened, coupled, or fixed to the brackets 300, respectively. The battery pack 400 may each include multiple battery cells. In this case, the battery cells may mean secondary batteries. There may be provided multiple battery packs 400. The battery pack 400 may have a rectangular parallelepiped shape.

With this configuration of the present disclosure, the container module 10 may not require the rack frames for installing the brackets 300 since the first side columns 210 and 220 are coupled and installed in the case 100 forming the exterior. Due to this configuration, the container module 10 may have a simplified structure and increased energy density.

Referring to FIGS. 1 to 3, the front panel 110 may be provided with a cooling unit 500. For example, the cooling unit 500 may be a heat exchanger such as heating, ventilation, and air conditioning (HVAC), a chiller, or a cooler. The cooling unit 500 may control the temperature of a cooling fluid flowing inside the case 100. According to an embodiment, the cooling unit 500 may supply or circulate a cooling liquid or a cooling gas into the inside of the case 100 through a pipe.

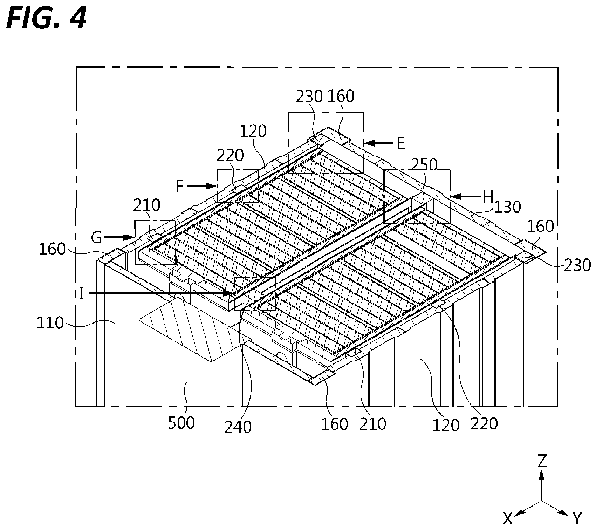

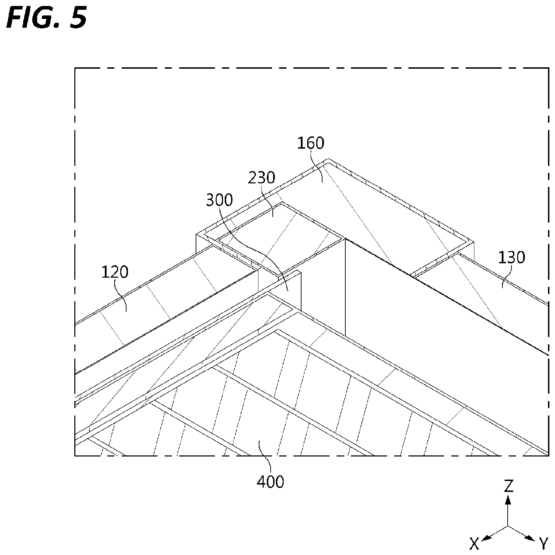

FIG. 4 is a view illustrating a cross-sectional configuration taken along cutting line A-A' in FIG. 1. FIG. 5 is an enlarged view of portion E of FIG. 4.

Referring to FIGS. 1 to 5, the case 100 may include a corner column 160. There may be provided four corner columns 160. The corner columns 160 may extend in the up-down direction or along the Z-axis direction. The corner columns 160 may be located at corners, respectively, where the side panels 120 and the rear panel 130 meet. In addition, the corner columns 160 may be positioned at the corners, respectively, where the side panels 120 and the front panel 110 meet. The corner columns 160 may form the exterior of the container module 10.

According to an embodiment, the second side columns 230 may refer to the side rear columns 230. There may be provided a pair of side rear columns 230. The side rear columns 230 may be positioned inside the case 100. The side rear columns 230 may extend in the up-down direction or along the Z-axis direction. According to an embodiment, the side rear columns 230 may be formed integrally with the corner columns 160, respectively. In addition, the side rear columns 230 may support the corner columns 160, respectively. In addition, the side rear columns 230 may be in contact with the corner columns 160, respectively. In addition, the side rear columns 230 may be coupled, fastened, fixed, or attached to the corner columns 160, respectively. For example, the side rear columns 230 may be welded to the inner surfaces of the corner columns 160, respectively.

According to an embodiment, the brackets 300 may be coupled, fastened, fixed, or attached to the side rear columns 230, respectively. In addition, the brackets 300 may be formed integrally with the side rear columns 230.

With this configuration of the present disclosure, since the side rear columns 230 are coupled to the case 100 of the container module 10, the rack frames for installing the brackets 300 may not be required. Due to this configuration, the container module 10 may have a simplified structure and increased energy density.

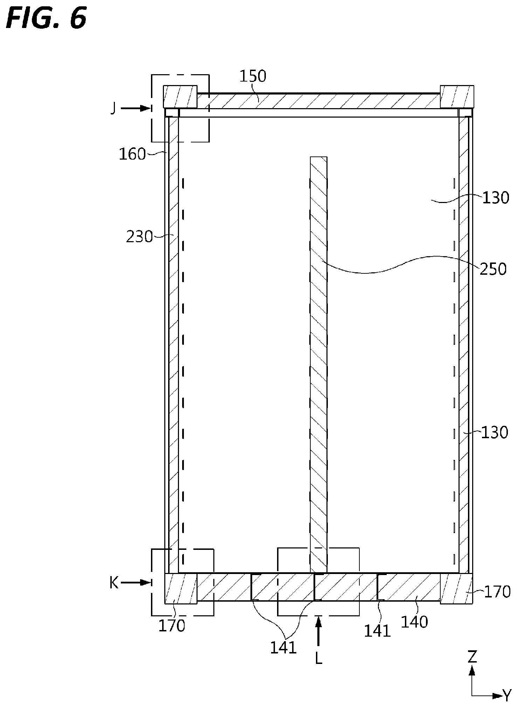

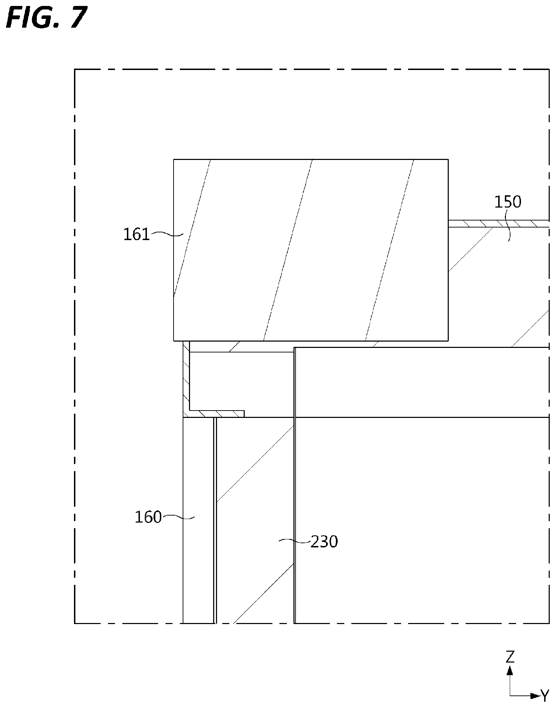

FIG. 6 is a view illustrating a cross-sectional configuration taken along cutting line B-B' in FIG. 1. FIG. 7 is an enlarged view of portion J of FIG. 6. Referring to FIGS. 6 and 7, the case 100 may include a top panel 150 positioned above the side panels 120. According to an embodiment, the side rear columns 230 may be integrally formed with the top panel 150. The side rear columns 230 may support the top panel 150. The side rear columns 230 may be in contact with the top panel 150. According to an embodiment, the side rear columns 230 may be coupled, fastened, fixed, or attached to the top panel 150. For example, the side rear columns 230 may be welded to the inner surface of the top panel 150.

The top panel 150 or the corner columns 160 may include coupling portions 161. According to an embodiment, the side rear columns 230 may be formed integrally with the coupling portions 161, respectively. The side rear columns 230 may support the coupling portions 161, respectively. The side rear columns 230 may be in contact with the coupling portions 161, respectively. According to an embodiment, the side rear columns 230 may be coupled, fastened, fixed, or attached to the coupling portions 161, respectively. For example, the side rear columns 230 may be welded to the inner surfaces of the coupling portions 161, respectively.

With this configuration of the present disclosure, the upper ends of the side rear columns 230 can be stably fixed to the case 100.

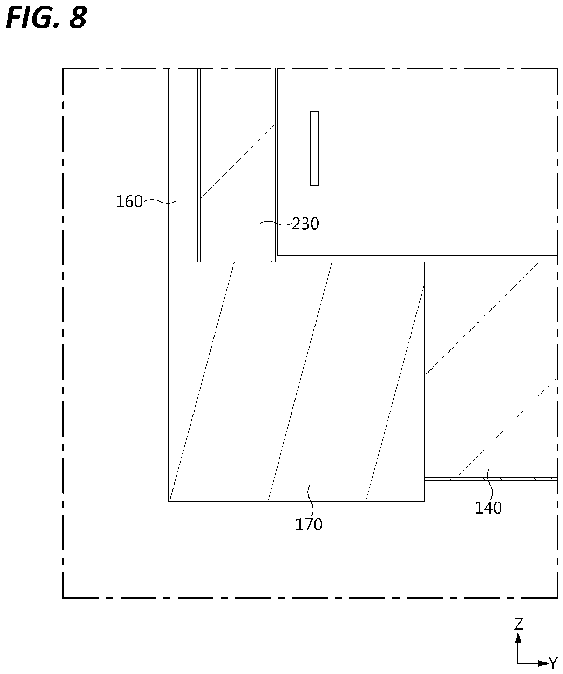

FIG. 8 is an enlarged view of portion K of FIG. 6. Referring to FIG. 8, the case 100 may include a bottom beam 170. The bottom beam 170 may be located below a side panel 120. The case 100 may include four bottom beams 170. The four bottom beams 170 may form a quadrangular shape. A bottom beam 170 may extend along the bottom edge of each of the side panels 120. A bottom beam 170 may respectively extend along the bottom edge of the front panel 110. A bottom beam 170 may extend along the bottom edge of the rear panel 130. The four bottom beams 170 may surround the bottom panel 140.

According to an embodiment, the side rear columns 230 may be formed integrally with the bottom beams 170, respectively. The side rear columns 230 may support the bottom beams 170, respectively. The side rear columns 230 may be in contact with the bottom beams 170, respectively. According to one embodiment, the side rear columns 230 may be coupled, fastened, fixed, or attached to the bottom beams 170, respectively. For example, the side rear columns 230 may be welded to the bottom beams 170, respectively.

With this configuration of the present disclosure, the lower ends of the side rear columns 230 may be stably fixed to the case 100.

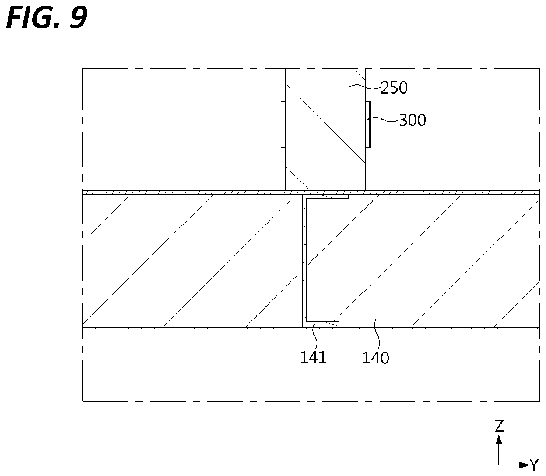

FIG. 9 is an enlarged view of portion L of FIG. 6. Referring to FIG. 9, the case 100 may include a bottom panel 140. The bottom panel 140 may include an auxiliary beam 141. There may be provided multiple auxiliary beams 141. The auxiliary beams 141 may extend in the front-rear direction or along the X-axis direction. The multiple auxiliary beams 141 may be arranged along the left-right direction or along the Y-axis direction. The auxiliary beams 141 may increase the rigidity of the bottom panel 140.

A center rear column 250 may be positioned inside the case 100. The center rear column 250 may extend in the up-down direction or along the Z-axis direction. According to an embodiment, the center rear column 250 may be formed integrally with the bottom panel 140 or an auxiliary beam 141. The center rear column 250 may support the bottom panel 140 or the auxiliary beam 141. The center rear column 250 may be in contact with the bottom panel 140 or the auxiliary beam 141. According to an embodiment, the center rear column 250 may be coupled, fastened, fixed, or attached to the bottom panel 140 or the auxiliary beam 141. For example, the center rear column 250 may be welded to the top surface of the bottom panel 140 or the auxiliary beam 141.

In addition, the brackets 300 may be coupled, fastened, fixed, or attached to the center rear column 250.

With this configuration of the present disclosure, since the center rear column 250 is coupled to the case 100 of the container module 10, the rack frames for installing the brackets 300 may not be required. Due to this configuration, the container module 10 may have a simplified structure and increased energy density.

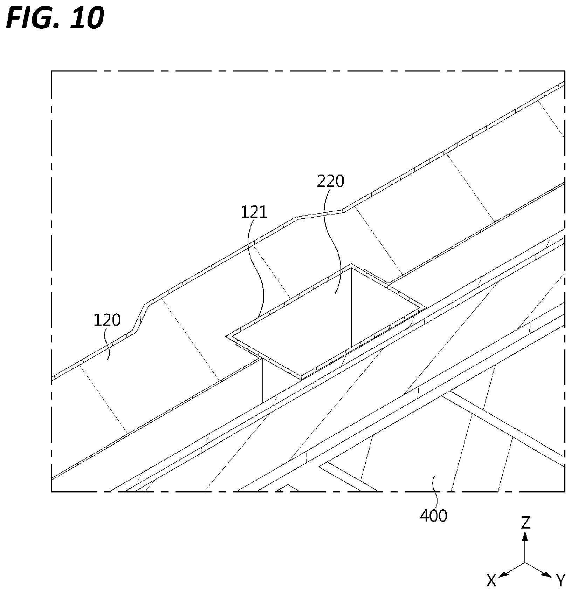

FIG. 10 is an enlarged view of portion F of FIG. 4. Referring to FIG. 10, the side panels 120 may each include a groove 121 formed on the inner surface. The grooves 121 may extend in the up-down direction or along the Z-axis direction. The side middle columns 220 may be accommodated or positioned in the grooves 121, respectively.

With this configuration of the present disclosure, since the side middle columns 220 are accommodated in the side panels 120, the space for accommodating the battery packs 400 may be increased. The energy density of the container module may be increased.

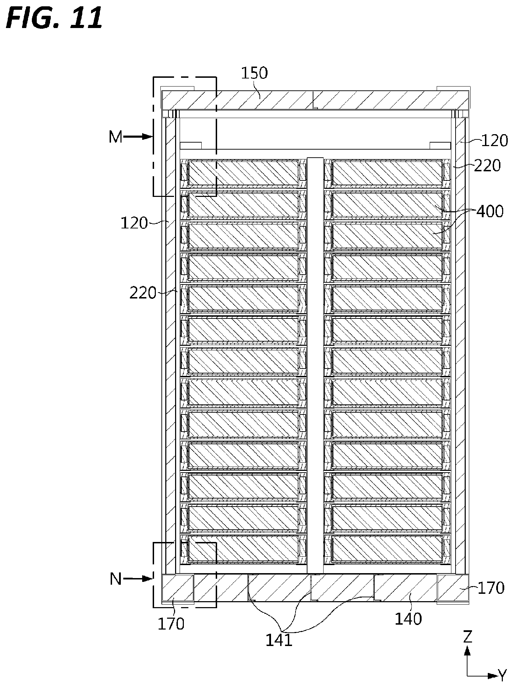

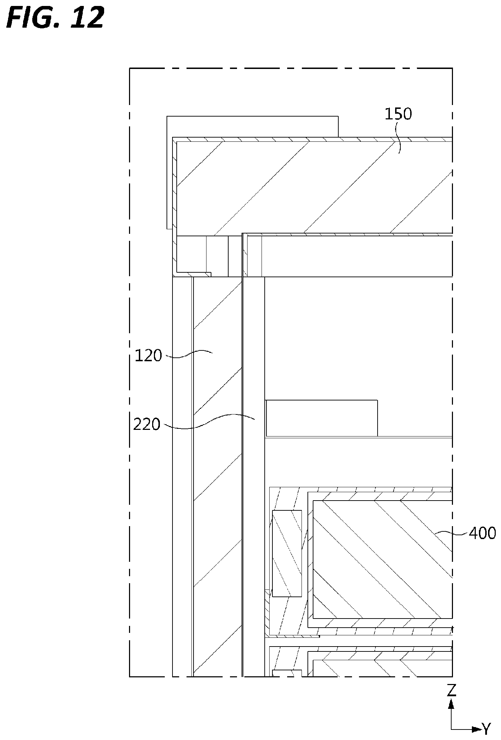

FIG. 11 is a view illustrating a cross-sectional configuration taken along cutting line C-C' in FIG. 1. FIG. 12 is an enlarged view of portion M of FIG. 11. Referring to FIGS. 11 and 12, the side middle columns 220 may be formed integrally with the top panel 150. The side middle columns 220 may support the top panel 150. The side middle columns 220 may be in contact with the top panel 150. In addition, according to an embodiment, the side middle columns 220 may be coupled, fastened, fixed, or attached to the top panel 150. For example, the side middle columns 220 may be welded to the inner surface of the top panel 150.

With this configuration of the present disclosure, the upper ends of the side middle columns 220 may be stably fixed to the case 100.

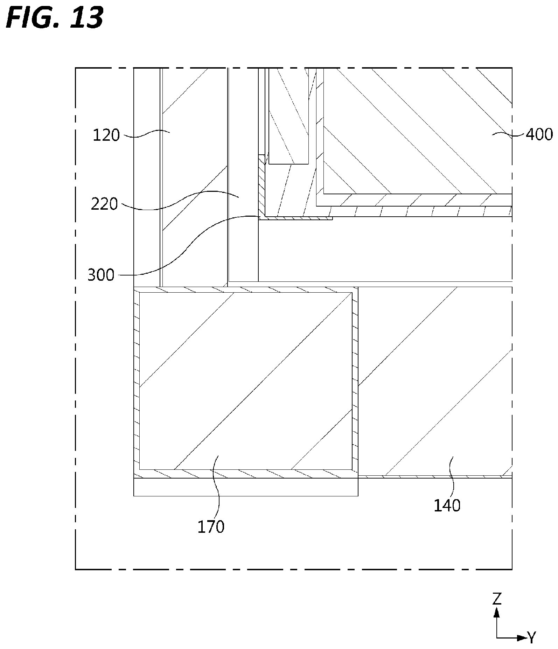

FIG. 13 is an enlarged view of portion N of FIG. 11. Referring to FIG. 13, the side middle columns 220 may be formed integrally with the bottom beams 170, respectively. The side middle columns 220 may support the bottom beams 170, respectively. The side middle columns 220 may be in contact with the bottom beams 170, respectively. According to an embodiment, the side middle columns 220 may be coupled, fastened, fixed, or attached to the bottom beams 170, respectively. For example, the side middle columns 220 may be welded to the bottom beams 170, respectively.

With this configuration of the present disclosure, the lower ends of the side middle columns 220 may be stably fixed to the case 100.

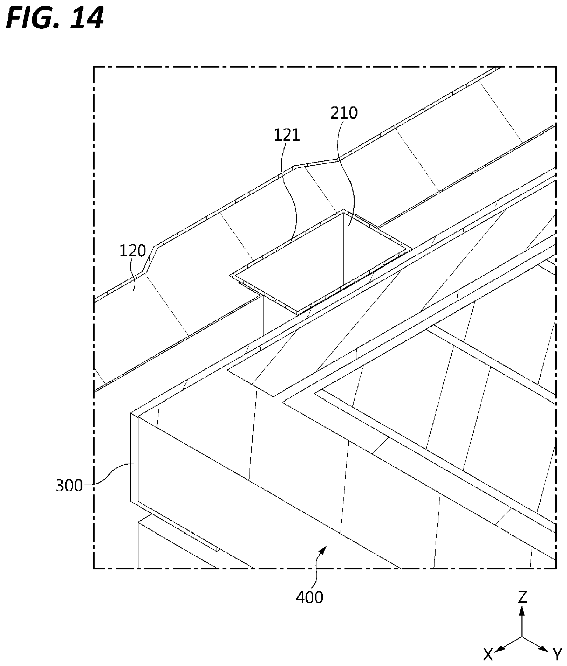

FIG. 14 is an enlarged view of portion G of FIG. 4. Referring to FIG. 14, the side panels 120 may each include a groove 121 formed on the inner surface. The grooves 121 may extend in the up-down direction or along the Z-axis direction. The side front columns 210 may be accommodated or positioned in the grooves 121, respectively.

With this configuration of the present disclosure, since the side front columns 210 are accommodated in the side panels 120, the space for accommodating the battery packs 400 may be increased. As a result, the energy density of the container module 10 may be increased.

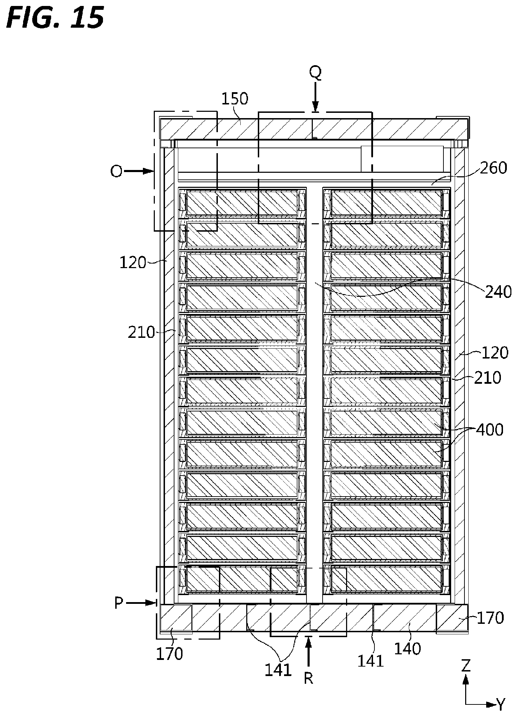

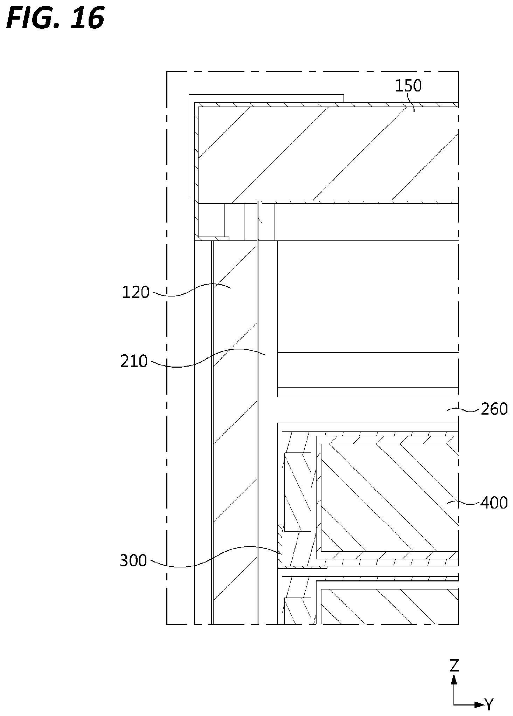

FIG. 15 is a view illustrating a cross-sectional configuration taken along cutting line D-D' in FIG. 1. FIG. 16 is an enlarged view of portion O of FIG. 15. Referring to FIGS. 15 and 16, the side front columns 210 may be formed integrally with the top panel 150. The side front columns 210 may support the top panel 150. The side front columns 210 may be in contact with the top panel 150. According to an embodiment, the side front columns 210 may be coupled, fastened, fixed, or attached to the top panel 150. For example, the side front columns 210 may be welded to the inner surface of the top panel 150.

With this configuration of the present disclosure, the upper ends of the side front columns 210 may be stably fixed to the case 100.

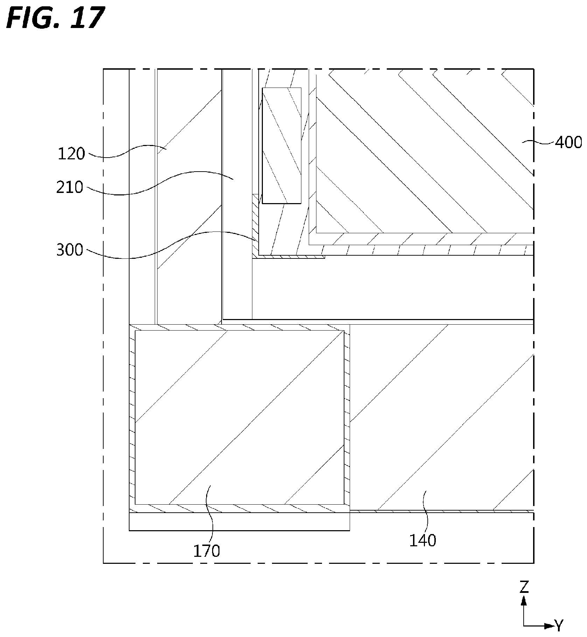

FIG. 17 is an enlarged view of portion P of FIG. 15. Referring to FIG. 17, the side front columns 210 may be formed integrally with the bottom beams 170, respectively. The side front columns 210 may support the bottom beams 170, respectively. The side front columns 210 may be in contact with the bottom beams 170, respectively. According to an embodiment, the side front columns 210 may be coupled, fastened, fixed, or attached to the bottom beams 170, respectively. For example, the side front columns 210 may be welded to the bottom beams 170, respectively.

With this configuration of the present disclosure, the lower ends of the side front columns 210 may be stably fixed to the case 100.

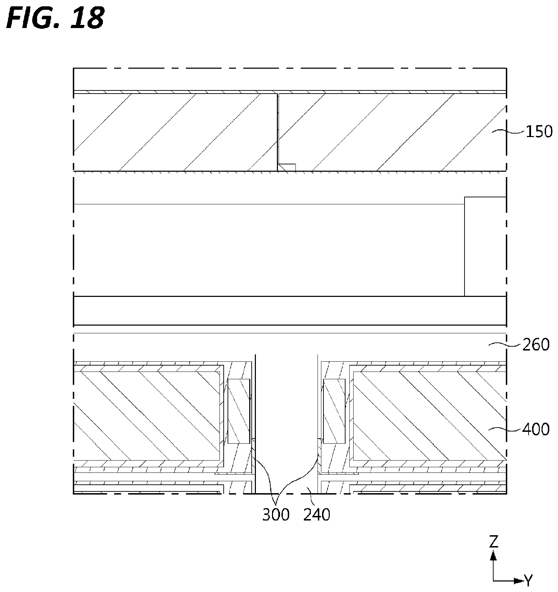

FIG. 18 is an enlarged view of portion Q of FIG. 15. Referring to FIG. 18, a reinforcement beam 260 may extend along a left-right direction or the Y-axis direction. According to an embodiment, the reinforcement beam 260 may be integrally formed with the side front columns 210 and the center front column 240. In addition, the reinforcement beam 260 may be connected, coupled, contacted, fastened, attached, or fixed to the side front columns 210 and the center front column 240. The upper end of the center front column 240 may be coupled with the reinforcement beam 260.

With this configuration of the present disclosure, the upper end of the center front column 240 may be stably fixed. The reinforcement beam 260 may improve the rigidity of the container module 10.

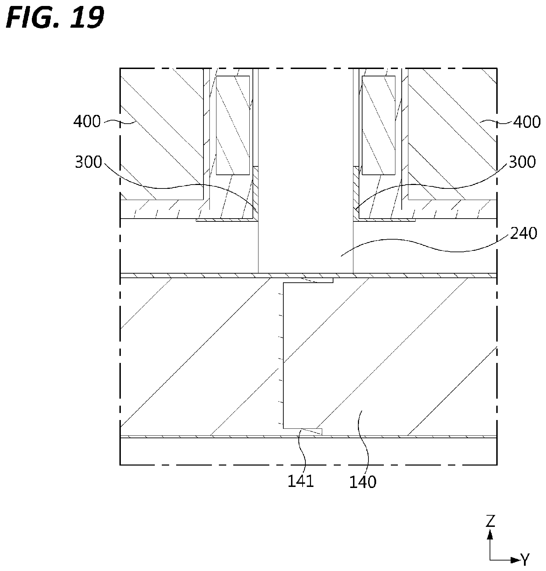

FIG. 19 is an enlarged view of portion R of FIG. 15. Referring to FIG. 19, the center front column 240 may be positioned inside the case 100. The center front column 240 may extend in the up-down direction or along the Z-axis direction. According to an embodiment, the center front column 240 may be formed integrally with the bottom panel 140 or an auxiliary beam 141. The center front column 240 may support the bottom panel 140 or the auxiliary beam 141. In addition, the center front column 240 may be in contact with the bottom panel 140 or the auxiliary beam 141. According to an embodiment, the center front column 240 may be coupled, fastened, fixed, or attached to the bottom panel 140 or the auxiliary beam 141. For example, the center front column 240 may be welded to the top surface of the bottom panel 140 or the auxiliary beam 141.

According to an embodiment, the brackets 300 may be coupled, fastened, fixed, or attached to the center front column 240. The brackets 300 may be formed integrally with the center front column 240.

With this configuration of the present disclosure, since the center front column 240 is coupled to the case 100 of the container module 10, the rack frames for installing the brackets 300 may not be required. Due to this configuration, the container module 10 may have a simplified structure and increased energy density.

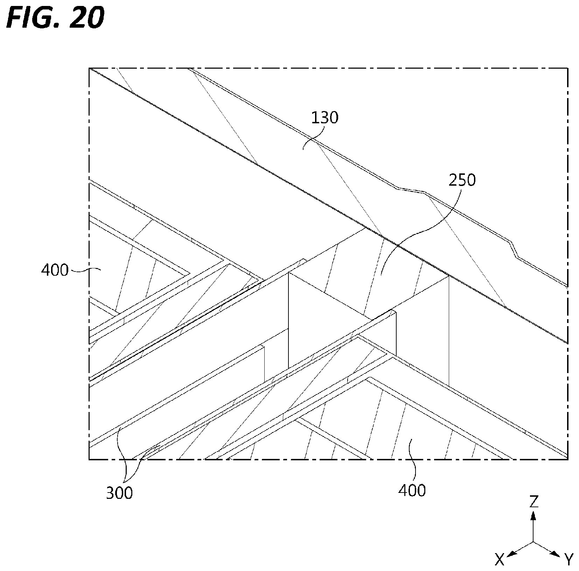

FIG. 20 is an enlarged view of portion H of FIG. 4. Referring to FIG. 20, the center rear column 250 may be formed integrally with the rear panel 130. The center rear column 250 may support the rear panel 130. The center rear column 250 may be in contact with the rear panel 130. The center rear column 250 may be coupled, fastened, fixed, or attached to the rear panel 130. For example, the center rear column 250 may be welded to the inner surface of the rear panel 130.

With this configuration of the present disclosure, since the center rear column 250 is coupled to the case 100 of the container module 10, the rack frames for installing the brackets 300 may not be required. Due to this configuration, the container module 10 may have a simplified structure and increased energy density.

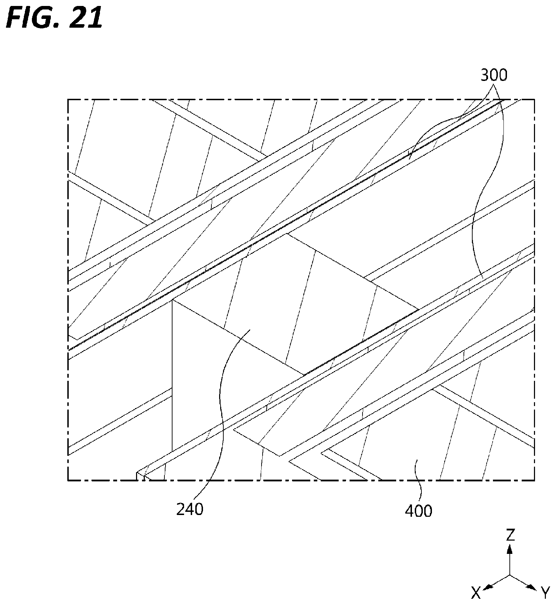

FIG. 21 is an enlarged view of portion I of FIG. 4. Referring to FIG. 21, the brackets 300 may be formed integrally with the center front column 240. The brackets 300 may be coupled, fastened, fixed, or attached to the center front column 240. According to an embodiment, the brackets 300 may each be coupled, fastened, fixed, or attached to the left or the right of the center front column 240.

With this configuration of the present disclosure, since the center front column 240 is coupled to the case 100 of the container module 10, the rack frames for installing the brackets 300 may not be required. Due to this configuration, the container module 10 may have a simplified structure and increased energy density.

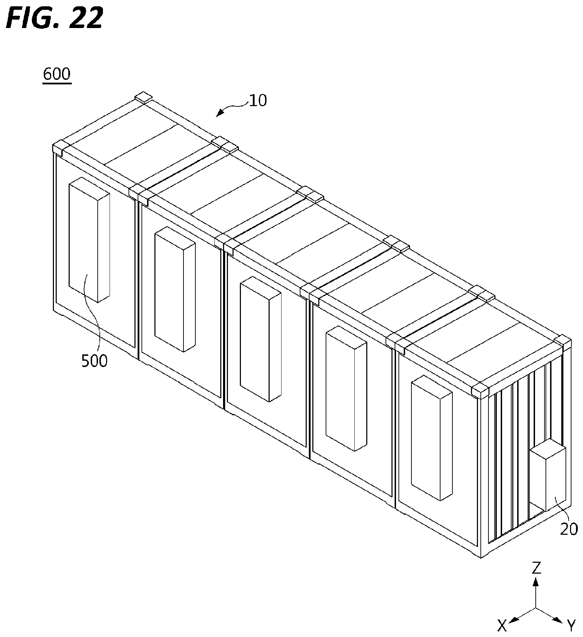

FIG. 22 is a view illustrating a container system 600 according to an embodiment of the present disclosure. Referring to FIG. 22, the container system 600 may include multiple container modules 10. The multiple container modules 10 may be physically or electrically connected with each other.

The case 100 may be configured to be capable of being stacked or coupled with the case 100 of another container module 10. The container system 600 may additionally include a control module 20. The control module 20 may be fastened, coupled, connected, stacked, or fixed to a side panel 120 of a container module 10.

The control module 20 may be electrically connected to the multiple container modules 10 included in the container system 600. The control module 20 may control charging and discharging of the multiple container modules 10. In addition, the control module 20 may obtain status information of the multiple container modules 10.

In addition, the container system 600 may be configured to additionally include a firefighting module (not illustrated) for controlling thermal events.

An energy storage system (ESS) according to the present disclosure may include a container module 10 according to the present disclosure. The ESS may include multiple container systems 600. In addition, the container system may include multiple container modules 10. Such an ESS may form a link group by combining a predetermined number of container modules 10 and the control module 20.

In this specification, directional terms such as up, down, left, right, front, and rear are used, but it is obvious to a person ordinarily skilled in the art that these terms are for convenience of description only and may vary depending on, for example, the location of an object thing or the position of an observer.

While the present disclosure has been described above with reference to several embodiments and drawings, the present disclosure is not limited thereto, and various changes and modifications can be made by a person ordinarily skilled in the art to which the present disclosure pertains without departing from the technical spirit of the present disclosure and the equivalent scope of the claims to be described below

## Claims

1. A container module comprising:
a case configured to provide a space therein and including a side panel;
a first side column positioned inside the case, extending in an up-down direction, and coupled to the side panel;
a bracket positioned inside the case, coupled to the first side column, and extending in a front-rear direction; and
a battery pack installed on the bracket.

2. The container module of claim 1, wherein the case further includes a top panel positioned above the side panel, and
wherein the first side column is coupled to the top panel.

3. The container module of claim 1, wherein the case further includes a bottom beam positioned below the side panel and extending along a bottom edge of the side panel, and
wherein the first side column is coupled to the bottom beam.

4. The container module of claim 1, wherein the case further includes:
a rear panel; and
a corner column positioned at a corner where the side panel and the rear panel meet, and extending in the up-down direction,
wherein the container module further comprises a second side column positioned inside the case, extending in the up-down direction, and coupled to the corner column, and
wherein the bracket is coupled to the second side column.

5. The container module of claim 4, wherein the case further includes a top panel positioned above the side panel, and
wherein the second side column is coupled to the top panel.

6. The container module of claim 4, wherein the case further includes a bottom beam positioned below the side panel and extending along a bottom edge of the side panel, and
wherein the second side column is coupled to the bottom beam.

7. The container module of claim 1, wherein the case further includes a rear panel,
wherein the container module further comprises a center rear column positioned inside the case, extending in the up-down direction, and coupled to the rear panel, and
wherein the bracket is coupled to the center rear column.

8. The container module of claim 7, wherein the case further includes a bottom panel, and
wherein the center rear column is coupled to the bottom panel.

9. The container module of claim 1, wherein the case further includes a bottom panel,
wherein the container module further comprises a center front column positioned inside the case, extending in the up-down direction, and coupled to the bottom panel, and
wherein the bracket is coupled to the center front column.

10. The container module of claim 9, further comprising:
a reinforcement beam extending in a left-right direction and coupled to the center front column.

11. The container module of claim 10, wherein the reinforcement beam is coupled to the first side column.

12. The container module of claim 1, wherein the side panel includes a groove formed on an inner surface thereof and extending in the up-down direction, and
wherein the first side column is positioned within the groove.

13. The container module of claim 1, wherein the case further includes a front panel, and
wherein the front panel includes a cooling part.

14. A container module comprising:
a case configured to provide an internal space therein;
a bracket positioned inside the case and coupled to the case; and
a battery pack installed on the bracket.

15. A container system comprising the container module of claim 1.

16. The container system of claim 15, further comprising:
a control module coupled to the side panel and electrically connected to the container module.

17. An energy storage system comprising the container module of claim 1.
